# EUROPÄISCHE PATENTANMELDUNG

(11) **EP 1 475 879 A2**
(43) Veröffentlichungstag der Anmeldung: **10.11.2004**
(21) Anmeldenummer: 04010440.8
(22) Anmeldetag: 03.05.2004
(51) Int. Cl.: H02J 17/00

(54) **Magnetfelderzeugungssystem**

(30) Priorität: 07.05.2003 DE 10320188
(71) Anmelder: ABB RESEARCH LTD., 8050 Zürich (CH)
(72) Erfinder: O' Brien, Kathleen, Mas. of Science, 69221 Dossenheim (DE); Scheible, Guntram, Dr. -Ing., 69493 Hirschberg (DE); Schutz, Jean, Dr.-Ing., 69115 Heidelberg (DE)
(74) Vertreter: Miller, Toivo

(57) **Zusammenfassung**

Es wird ein Magnetfelderzeugungssystem mit einer dreidimensionalen Wicklungsanordnung mit drei im wesentlichen orthogonal zueinander angeordneten, eine Maschine oder Anlage (4) umschließenden Wicklungen (1, 2, 3) oder Wicklungspaaren (14, 15, 16, 17, 18, 19) oder Wicklungssystemen (14, 15, 16, 17, 20, 18, 19, 21) vorgeschlagen, deren Wicklungsachsen (5, 6, 7) im wesentlichen senkrecht aufeinander stehen und die über drei Einspeiseschaltungen (9, 10, 11) mit Wechselgrößen versorgt werden, wobei
- zwei Wicklungen / Wicklungspaare / Wicklungssysteme mit ersten Wechselgrößen gespeist werden, welche eine gleiche erste Frequenz (f₁) aufweisen und miteinander synchronisiert sind,
- eine Phasenverschiebung von vorzugsweise 90° zwischen den beiden ersten Wechselgrößen eingestellt wird,
- eine Wicklung / Wicklungspaar / Wicklungssystem mit einer zweiten Wechselgröße gespeist wird, welche eine zweite Frequenz (f₂) aufweist, die geringer als die erste Frequenz ist,
- eine sukzessive Umschaltung dieser Wechselgrößen auf die drei Wicklungen / Wicklungspaare / Wicklungssysteme mit einer dritten Frequenz (f₃) erfolgt, die geringer als die zweite Frequenz ist.

## Beschreibung

Die Erfindung bezieht sich auf ein Magnetfelderzeugungssystem gemäß dem Oberbegriff des Anspruchs 1 und kann insbesondere zur Erzeugung eines Magnetfeldes dienen, welches zur Energieeinspeisung von Sensoren und/oder Aktoren aus diesem Magnetfeld dient.

Aus der DE 39 22 556 C3 ist eine Anordnung zur kontaktlosen Energie- und Sensorsignalübertragung mit einem HF-Sender zum Aufbau eines unmodulierten magnetischen Hochfrequenzfeldes über eine Sendespule bekannt, bei der ein Transponder das hochfrequente Magnetfeld über eine Sekundärwicklung aufnimmt und zu seiner Energieversorgung heranzieht. Mit der aus dem magnetischen Feld gewonnenen Versorgungsenergie werden Sensor und Transponder versorgt.

Dabei wird das erzeugte Magnetfeld durch Abschirmungen, wie beispielsweise großflächige Metallplatten oder durch Metallschienen (beispielsweise Rahmenteile) gebildete geschlossene Schleifen stark geschwächt, so dass eine zuverlässige Energieversorgung insbesondere bei sich bewegenden Sensoren/Aktoren nicht befriedigend gesichert ist.

Aus der DE 102 09 656 sind folgende unterschiedliche Varianten zur Erzeugung eines dreidimensionalen, rotierenden Magnetfeldes bekannt:

Die erste Variante der DE 102 09 656 betrifft ein Magnetfelderzeugungssystem mit einer dreidimensionalen Wicklungsanordnung mit drei im wesentlichen orthogonal zueinander angeordneten, eine Maschine oder Anlage umschließenden Wicklungen, deren Wicklungsachsen im wesentlichen senkrecht aufeinander stehen und die über drei Einspeiseschaltungen mit Wechselgrößen versorgt werden,
- wobei alle drei Wechselgrößen eine gleiche erste Frequenz f₁ und ähnliche Stromamplituden aufweisen und miteinander synchronisiert sind,
- wobei eine Phasenverschiebung von vorzugsweise 90° zwischen der Wechselgröße der ersten Einspeiseschaltung einerseits und den beiden Wechselgrößen der zweiten und dritten Einspeiseschaltung andererseits eingestellt wird und
- wobei die Stromamplituden der Wechselgrößen der zweiten und dritten Einspeiseschaltung mit einer zweiten Frequenz f₂ moduliert werden.

Die zweite Variante der DE 102 09 656 betrifft ein Magnetfelderzeugungssystem mit einer dreidimensionalen Wicklungsanordnung mit drei im wesentlichen orthogonal zueinander angeordneten, eine Maschine oder Anlage umschließenden Wicklungen, deren Wicklungsachsen im wesentlichen senkrecht aufeinander stehen und die über Einspeiseschaltungen mit Wechselgrößen versorgt werden,
- wobei lediglich zwei Einspeiseschaltungen zur Versorgung der drei Wicklungen vorgesehen sind,
- wobei die Wechselgrößen der beiden Einspeiseschaltungen eine gleiche erste Frequenz f₁ und ähnliche Stromamplituden sowie ähnliche Spannungsamplituden aufweisen und miteinander synchronisiert sind,
- wobei eine Phasenverschiebung von vorzugsweise 90° zwischen der Wechselgröße der ersten Einspeiseschaltung und der Wechselgröße der zweiten Einspeiseschaltung eingestellt wird und
- wobei die erste Wicklung mit der Wechselgröße der ersten Einspeiseschaltung beaufschlagt wird, während die Wechselgröße der zweiten Einspeiseschaltung alternierend jeweils beim Stromdurchgang auf die zweite bzw. dritte Wicklung aufgeschaltet wird.

Für beide Varianten der DE 102 09 656 gilt, dass wahlweise eine sukzessive Umschaltung der Wechselgrößen der Einspeiseschaltungen auf die drei Wicklungen mit einer dritten Frequenz f₃ erfolgen kann.

Der Erfindung liegt die Aufgabe zugrunde, ein Magnetfelderzeugungssystem anzugeben, bei dem störende Einflüsse von metallischen Abschirmungen stark reduziert sind.

Diese Aufgabe wird gelöst durch ein Magnetfelderzeugungssystem mit einer dreidimensionalen Wicklungsanordnung mit drei im wesentlichen orthogonal zueinander angeordneten, eine Maschine oder Anlage umschließenden Wicklungen oder Wicklungspaaren oder Wicklungssystemen, deren Wicklungsachsen im wesentlichen senkrecht aufeinander stehen und die über drei Einspeiseschaltungen mit Wechselgrößen versorgt werden, wobei
- zwei Wicklungen / Wicklungspaare / Wicklungssysteme mit ersten Wechselgrößen gespeist werden, welche eine gleiche erste Frequenz aufweisen und miteinander synchronisiert sind,
- eine Phasenverschiebung von vorzugsweise 90° zwischen den beiden ersten Wechselgrößen eingestellt wird,
- eine Wicklung / Wicklungspaar / Wicklungssystem mit einer zweiten Wechselgröße gespeist wird, welche eine zweite Frequenz aufweist, die geringer als die erste Frequenz ist,
- eine sukzessive Umschaltung dieser Wechselgrößen auf die drei Wicklungen / Wicklungspaare / Wicklungssysteme mit einer dritten Frequenz erfolgt, die geringer als die zweite Frequenz ist.

Die mit der Erfindung erzielbaren Vorteile bestehen insbesondere darin, dass beim erzeugten rotierenden Magnetfeld infolge seiner omnidirektionalen Abstrahlung die störenden Auswirkungen von Abschirmungen weitgehend verhindert, zumindest jedoch stark reduziert werden, so dass auch unter ungünstigen Gegebenheiten, d. h. relativ großflächigen Abschirmungen, eine Magnetfelderzeugung mit ausreichend hoher Magnetfeldstärke gewährleistet ist.

Das vorgeschlagene Verfahren zur Erzeugung eines rotierenden Magnetfeldes ist insbesondere geeignet für eine in der DE 199 26 799 A1 vorgeschlagene Anordnung zur drahtlosen Versorgung einer Vielzahl Sensoren mit elektrischer Energie unter Einsatz mehrerer von einem mittelfrequenten Oszillator gespeisten Primärwicklungen (Primärspulen, Sendespulen), wobei jeder Sensor mindestens eine zur Energieaufnahme aus einem mittelfrequenten Magnetfeld (Bereich von etwa 15 kHz bis etwa 15 MHz) geeignete Sekundärwicklung (Sekundärspule, Empfangsspule) aufweist. Der Vorteil der omnidirektionalen Abstrahlung des erzeugten rotierenden Magnetfeldes ist insbesondere bei an beweglichen Maschinenkomponenten montierten Sensoren (Näherungssensoren) bedeutsam.

Das vorgeschlagene Verfahren zur Erzeugung eines rotierenden Magnetfeldes ist des weiteren bestens geeignet für eine in der DE 199 26 562 A1 vorgeschlagene Anordnung zur drahtlosen Versorgung einer Vielzahl Aktoren mit elektrischer Energie, wobei ebenfalls das produzierte Magnetfeld zur Energieübertragung genutzt wird.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: eine Anordnung zur Bildung eines dreidimensional rotierenden Magnetfeldes,
- Fig. 2: ein Prinzipschaltbild der elektrischen Versorgung/Ansteuerung der Anordnung gemäß Fig. 1,
- Fig. 3: eine Grundanordnung einer kubusförmigen, dreidimensionalen Magnetfelderzeugungsanordnung,
- Fig. 4: eine im Vergleich zur Grundanordnung gemäß Fig. 3 vergrößerte, quaderförmige Magnetfelderzeugungsanordnung,
- Fig. 5: einen in der xy-Ebene rotierenden Magnetfeldvektor eines zweidimensionalen Magnetfeldes,
- Fig. 6: Magnetfeldvektoren, die in der xy-Ebene, in der yz-Ebene und in der zx-Ebene rotieren,
- Fig. 7: eine Skizze zur anschaulichen Darstellung der von einem dreidimensionalen Magnetfeldvektor überstrichenen Flächen,
- Fig. 8: die bei Erzeugung eines omnidirektionalen Magnetfeldes vom Magnetfeldvektor überstrichenen Flächen,
- Fig. 9: der Aufbau einer Anordnung zur Erzeugung elektrischer Energie aus dem mittels der Magnetfelderzeugungseinrichtung produzierten Magnetfeld.

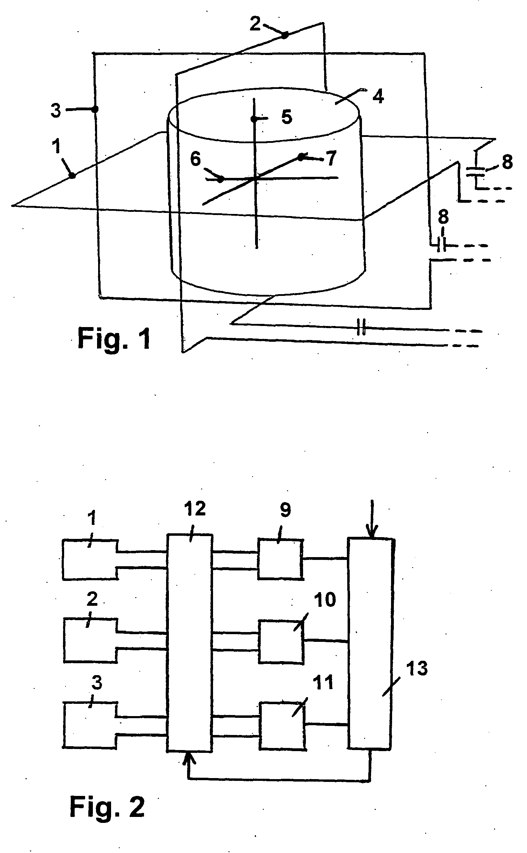

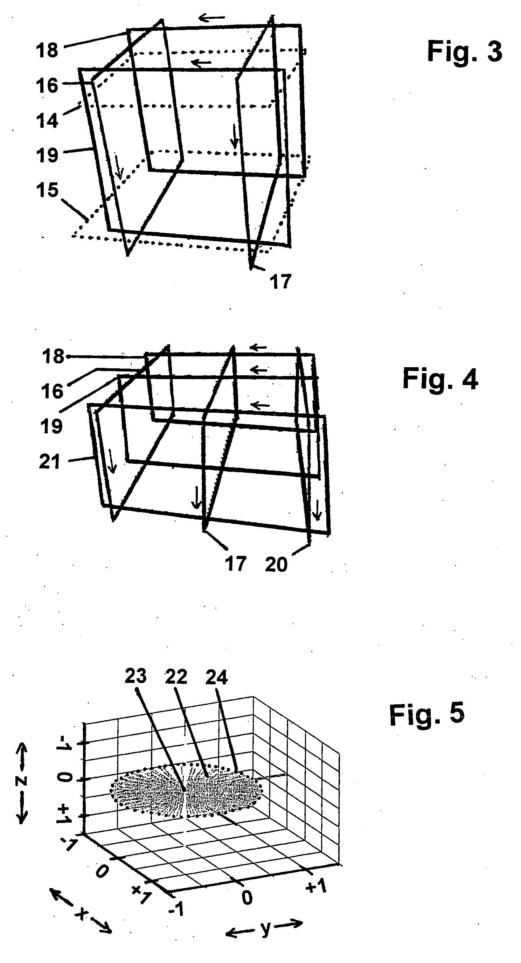

In Fig. 1 ist eine Anordnung zur Bildung eines dreidimensional rotierenden Magnetfeldes dargestellt. Gemäß dieser ersten Ausführungsform wird eine dreidimensionale Wicklungsanordnung mit drei orthogonal zueinander angeordneten, eine Maschine oder Anlage 4 umschließenden Wicklungen 1, 2, 3 vorgeschlagen, d. h. die Wicklungsachse 5 (entspricht der z-Achse der Koordinatensysteme gemäß den Fig. 5 - 8) der ersten Wicklung 1, die Wicklungsachse 6 (entspricht der x-Achse der Koordinatensysteme gemäß den Fig. 5 - 8) der zweiten Wicklung 2 und die Wicklungsachse 7 (entspricht der y-Achse der Koordinatensysteme gemäß den Fig. 5 - 8) der dritten Wicklung 3 stehen jeweils senkrecht aufeinander. Die Wicklungen 1, 2, 3 sind in der Regel mit Resonanzkondensatoren 8 zu Resonanzkreisen verschaltet, welche durch (im Resonanzfall betriebene und dadurch) mit minimaler Leistung dimensionierbare Einspeiseschaltungen (siehe Einspeiseschaltungen 9, 10, 11 gemäß Fig. 2) versorgt werden.

Fig. 2 zeigt ein Prinzipschaltbild der elektrischen Versorgung/Ansteuerung der Anordnung gemäß Fig. 1. Die Resonanzkreise mit den Wicklungen 1 bzw. 2 bzw. 3 werden durch Einspeiseschaltungen 9 bzw. 10 bzw. 11 versorgt, wobei die Wechselgrößen dieser Einspeiseschaltungen über eine Umschalteinrichtung 12 in die Resonanzkreise respektive Wicklungen eingespeist werden. Eine Ansteuereinrichtung 13 dient zur synchronisierten Ansteuerung der Einspeiseschaltungen 9, 10, 11 sowie der Umschalteinrichtung 12.

In Fig. 3 ist eine Grundanordnung (dreidimensionale Anordnung) einer kubusförmigen, dreidimensionalen Magnetfelderzeugungsanordnung dargestellt, bestehend aus drei orthogonal zueinander angeordneten Wicklungspaaren mit jeweils zwei sich parallel gegenüberstehenden Wicklungen, d. h. mit einem ersten Wicklungspaar mit erster Wicklung 14 und parallel hierzu angeordneter zweiter Wicklung 15 (die Wicklungsachsen der Wicklungen 14, 15 entsprechen der z-Achse der Koordinatensysteme gemäß den Fig. 5 - 8), mit einem zweiten Wicklungspaar mit erster Wicklung 16 und parallel hierzu angeordneter zweiter Wicklung 17 (die Wicklungsachsen der Wicklungen 16, 17 entsprechen der x-Achse der Koordinatensysteme gemäß den Fig. 5 - 8) und mit einem dritten Wicklungspaar mit erster Wicklung 18 und parallel hierzu angeordneter zweiter Wicklung 19 (die Wicklungsachsen der Wicklungen 18, 19 entsprechen der y-Achse der Koordinatensysteme gemäß den Fig. 5 - 8). Die Richtungen der in den Wicklungen fließenden Ströme sind jeweils durch Pfeile gekennzeichnet. Im Raum zwischen den Wicklungspaaren ist die Maschine oder Anlage 4 mit einer Vielzahl von Sensoren und/oder Aktoren angeordnet, welche Baukomponenten aufweisen, welche elektrische Energie aus dem Magnetfeld zwischen den Wicklungspaaren beziehen.

In Fig. 4 ist eine im Vergleich zur Grundanordnung gemäß Fig. 3 vergrößerte, quaderförmige Magnetfelderzeugungsanordnung dargestellt. Das aus den Wicklungen 16, 17 bestehende zweite Wicklungspaar ist um eine weitere Wicklung 20 ergänzt, so dass ein zweites Wicklungssystem (bestehend aus drei parallelen Wicklungen) entsteht. Das aus den Wicklungen 18, 19 bestehende dritte Wicklungspaar ist um eine weitere Wicklung 21 ergänzt, so dass ein drittes Wicklungssystem (bestehend aus drei parallelen Wicklungen) entsteht. Das aus den Wicklungen 14, 15 bestehende erste Wicklungspaar ist vorzugsweise ebenfalls mit einer weiteren Wicklung versehen (zumindest jedoch an die vergrößerte Konfiguration angepasst), so dass ein erstes Wicklungssystem (bestehend aus drei parallelen Wicklungen) entsteht. Alle Wicklungen 16, 17, 20 bzw. 18, 19, 21 (sowie 14, 15) eines jeden Wicklungssystems sind gleichartig bezüglich ihrer Abmessungen und mit Resonanzkondensatoren jeweils zu Resonanzkreisen verschaltet, welche durch Einspeiseschaltungen versorgt werden.

Selbstverständlich weisen die von den Einspeiseschaltungen für die Wicklungen 14, 15 gebildeten Wechselgrößen gleiche Frequenz und vorzugsweise gleiche Strom- und Spannungsamplituden auf und sind miteinander synchronisiert. Desgleichen weisen die von den Einspeiseschaltungen für die Wicklungen 16, 17, 20 gebildeten Wechselgrößen gleiche Frequenz und vorzugsweise gleiche Strom- und Spannungsamplituden auf und sind miteinander synchronisiert. Schließlich weisen auch die von den Einspeiseschaltungen für die Wicklungen 18, 19, 21 gebildeten Wechselgrößen gleiche Frequenz und vorzugsweise gleiche Strom- und Spannungsamplituden auf und sind miteinander synchronisiert.

Die Wicklungen 1, 14, 15, die ein Magnetfeld in Richtung der z-Achse erzeugen, werden nachstehend auch als z-Spulen bezeichnet. Die Wicklungen 2, 16, 17, 20, die ein Magnetfeld in Richtung der x-Achse erzeugen, werden nachstehend auch als x-Spulen bezeichnet. Die Wicklungen 3, 18, 19, 21, die ein Magnetfeld in Richtung der y-Achse erzeugen, werden nachstehend auch als y-Spulen bezeichnet.

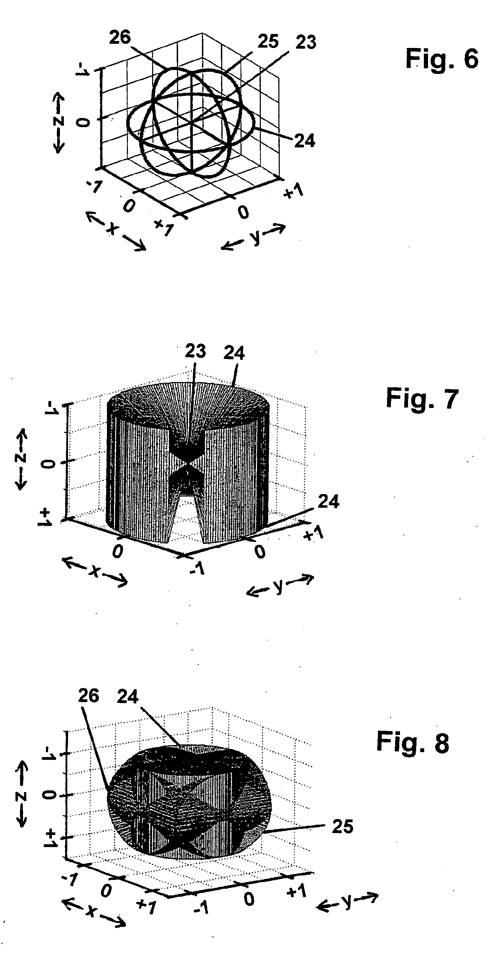

Die Erläuterungen gemäß den Fig. 5, 6 und 7 dienen zum Verständnis des in Fig. 8 dargestellten, im Ergebnis zu erzielenden omnidirektionalen Magnetfeldes.

Fig. 5 zeigt einen in der xy-Ebene rotierenden Magnetfeldvektor eines zweidimensionalen Magnetfeldes. Dieses Magnetfeld wird unter Verwendung mindestens einer x-Spule und mindestens einer y-Spule erzeugt, d. h. mit Hilfe von zwei orthogonal zueinander angeordneten Wicklungen bzw. Wicklungspaaren bzw. Wicklungssystemen, deren Wicklungsachsen aufeinander senkrecht stehen und die über zwei Einspeiseschaltungen mit ersten Wechselgrößen versorgt werden, wobei
- die ersten Wechselgrößen gleiche Frequenz f₁, ähnliche Stromamplituden und ähnliche Spannungsamplituden aufweisen und miteinander synchronisiert sind,
- eine Phasenverschiebung von vorzugsweise 90° zwischen den ersten Wechselgrößen eingestellt wird,
- die Frequenz der ersten Wechselgrößen vorzugsweise 120 kHz beträgt.

Fig. 5 zeigt ein Koordinatensystem mit den Koordinatenachsen x, y, z und den um den Ursprung 23 (mit x=0, y=0, z=0) rotierenden Magnetfeldvektor 22, dessen Spitze eine Kreisbahn 24 in der xy-Ebene beschreibt, wobei im Beispiel die Bereiche -1 <x<+1 und -1<y<+1 bei z=0 überstrichen werden.

Wird dieses bei Fig. 5 für die xy-Ebene skizzierte zweidimensionale Magnetfeld alternativ in der yz-Ebene oder der zx-Ebene erzeugt, gelangt man zu den in Fig. 6 gezeigten Magnetfeldvektoren 24 bzw. 25 bzw. 26, die in der xy-Ebene bzw. in der yz-Ebene bzw. in der zx-Ebene jeweils um den Ursprung 23 rotieren.

Geht man von einem in der xy-Ebene gemäß den Erläuterungen unter Fig. 5 erzeugten zweidimensionalen Magnetfeld unter Einsatz von zwei orthogonalen Wicklungen oder Wicklungspaaren oder Wicklungssystemen (mindestens eine x-Spule und mindestens eine y-Spule) und mit Beaufschlagung durch miteinander synchronisierte, 90° Phasenverschiebung gegeneinander aufweisende erste Wechselgrößen mit einer Frequenz f₁ = 120 kHz aus und versorgt die weitere orthogonale Wicklung oder das hierzu orthogonale Wicklungspaar oder das hierzu orthogonale Wicklungssystem (mindestens eine z-Spule) mit einer Wechselgröße mit einer Frequenz f₂, welche beispielsweise kleiner (beispielsweise um den Faktor 10 kleiner oder um 10 % kleiner) als die Frequenz f₁ ist, beispielsweise f₂ = 12 kHz oder f₂ = 108 kHz, so entsteht ein zusätzlicher Magnetfeldvektor senkrecht zur xy-Ebene und mit der Frequenz f₂. Folglich wird der Magnetfeldvektor 22 gemäß Fig. 5 mit der Frequenz f₂ in Richtung der z-Achse (beidseitig des Ursprungs 23) aus der xy-Ebene abgelenkt, wobei in Fig. 7 hierzu eine Skizze zur anschaulichen Darstellung der von einem dreidimensionalen Magnetfeldvektor überstrichenen Flächen gezeigt ist. Die Spitze des vom Ursprung 23 ausgehenden Magnetfeldvektors wandert in Abhängigkeit von f₂ längs der Mantelfläche des zwischen zwei Kreisbahnen 24 in der xy-Ebene mit z = +1 und z = -1 gebildeten Zylinders.

Ein in Fig. 7 skizziertes dreidimensionales Magnetfeld kann demnach zusammenfassend beispielsweise mit folgenden Maßnahmen erzeugt werden:
• Einspeiseschaltung 10 speist Wicklung 2 (x-Spule) mit erster Wechselgröße mit Frequenz f₁.
• Einspeiseschaltung 11 speist Wicklung 3 (y-Spule) mit erster Wechselgröße mit Frequenz f₁, jedoch mit 90° Phasenverschiebung bezüglich der von Einspeiseschaltung 10 erzeugten ersten Wechselgröße.
• Einspeiseschaltung 9 speist Wicklung 1 (z-Spule) mit zweiter Wechselgröße mit Frequenz f₂.

Wenn die Einspeiseschaltungen 9, 10, 11 nicht permanent einer bestimmten Wicklung fest zugeordnet sind, sondern unter Einsatz der mittels Ansteuereinrichtung 13 angesteuerten Umschalteinrichtung 12 mit einer Frequenz f₃, welche beispielsweise kleiner (beispielsweise um den Faktor 10 kleiner oder um 10 % kleiner) als die Frequenz f₂ ist, beispielsweise f₃ = 1200 Hz bzw. f₃ = 97,2 kHz, nacheinander zyklisch auf die Wicklungen 1, 2, 3 geschaltet werden, entsteht ein omnidirektionales (rundstrahlendes) Magnetfeld. Fig. 8 zeigt die bei Erzeugung eines derartigen omnidirektionalen Magnetfeldes vom Magnetfeldvektor überstrichenen Flächen. Mit der Frequenz f₃ werden sukzessive folgende Szenarien eingestellt:
- Szenarium A: Die Spitze des vom Ursprung 23 ausgehenden Magnetfeldvektors wandert mit der Frequenz f₂ längs der Mantelfläche des zwischen zwei Kreisbahnen 24 in der xy-Ebene mit z = +1 und z = -1 entstehenden Zylinders (wie in Fig. 7 gezeigt).
- Szenarium B: Die Spitze des vom Ursprung 23 ausgehenden Magnetfeldvektors wandert mit der Frequenz f₂ längs der Mantelfläche des zwischen zwei Kreisbahnen 25 in der yz-Ebene mit x = +1 und x = -1 entstehenden Zylinders.
- Szenarium C: Die Spitze des vom Ursprung 23 ausgehenden Magnetfeldvektors wandert mit der Frequenz f₂ längs der Mantelfläche des zwischen zwei Kreisbahnen 26 in der zx-Ebene mit y = +1 und y = -1 entstehenden Zylinders.

Die vorstehend angegebenen Frequenzen f₁ = 120 kHz, f₂ = 12 kHz, f₃ = 1200 Hz bzw. f₁ = 120 kHz, f₂ = 108 kHz, f₃ = 97,2 kHz sind lediglich beispielhaft. Es ist selbstverständlich beispielsweise auch möglich, für f₂ einen Wert zwischen 12kHz und 108 kHz sowie für f₃ einen Wert zwischen 1,2 kHz und 97,2 kHz auszuwählen.

Ein in Fig. 8 skizziertes omnidirektionales Magnetfeld kann demnach zusammenfassend beispielsweise mit folgenden Maßnahmen und einer von der Frequenz f₃ vorgegebenen Schrittfolge 1. Schritt - 2. Schritt - 3. Schritt - 4. Schritt usw. erzeugt werden:
1. Schritt:
   - Einspeiseschaltung 10 speist Wicklung 2 (x-Spule) mit erster Wechselgröße mit Frequenz f₁.
   - Einspeiseschaltung 11 speist Wicklung 3 (y-Spule) mit erster Wechselgröße mit Frequenz f₁, jedoch mit 90° Phasenverschiebung bezüglich der von Einspeiseschaltung 10 erzeugten ersten Wechselgröße.
   - Einspeiseschaltung 9 speist Wicklung 1 (z-Spule) mit zweiter Wechselgröße mit Frequenz f₂.
2. Schritt:
   - Einspeiseschaltung 10 speist Wicklung 3 (y-Spule) mit erster Wechselgröße mit Frequenz f₁.
   - Einspeiseschaltung 11 speist Wicklung 1 (z-Spule) mit erster Wechselgröße mit Frequenz f₁, jedoch mit 90° Phasenverschiebung bezüglich der von Einspeiseschaltung 10 erzeugten ersten Wechselgröße.
   - Einspeiseschaltung 9 speist Wicklung 2 (x-Spule) mit zweiter Wechselgröße mit Frequenz f₂.
3. Schritt:
   - Einspeiseschaltung 10 speist Wicklung 1 (z-Spule) mit erster Wechselgröße mit Frequenz f₁.
   - Einspeiseschaltung 11 speist Wicklung 2 (x-Spule) mit erster Wechselgröße mit Frequenz f₁, jedoch mit 90° Phasenverschiebung bezüglich der von Einspeiseschaltung 10 erzeugten ersten Wechselgröße.
   - Einspeiseschaltung 9 speist Wicklung 3 (y-Spule) mit zweiter Wechselgröße mit Frequenz f₂.
4. Schritt wie 1. Schritt.
5. Schritt wie 2. Schritt usw.

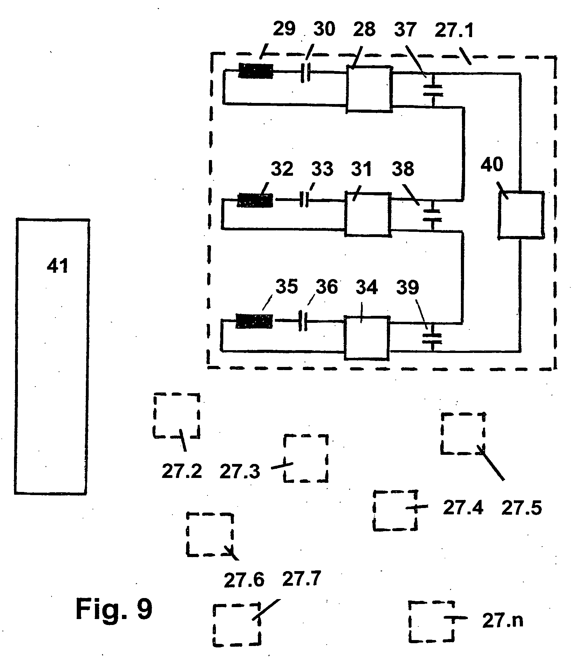

In Fig. 9 ist beispielhaft für einen Sensor oder Aktor 27.1 der Aufbau einer Anordnung zur Erzeugung elektrischer Energie aus dem mittels einer wie vorstehend aufgebauten Magnetfelderzeugungseinrichtung 41 produzierten Magnetfeld dargestellt. Es ist ein Gleichrichter 28 zu erkennen, dessen Wechselanschlüsse mit einer Serienschaltung einer Wicklung 29 mit einem Resonanzkondensator 30 verbunden ist (Serien-Resonanzkreis). In gleicher Weise liegen an den Wechselanschlüssen eines Gleichrichters 31 die Serienschaltung einer Wicklung 32 mit einem Resonanzkondensator 33 bzw. an den Wechselanschlüssen eines Gleichrichters 34 die Serienschaltung einer Wicklung 35 mit einem Resonanzkondensator 36. Die Wicklungsachsen der drei Wicklungen 29, 32, 35 sind jeweils rechtwinklig zueinander angeordnet und schneiden sich in einem zentralen Punkt eines aus einem magnetisch wirksamen Material aufgebauten Kems der dreidimensionalen Wicklungsanordnung.

Die Gleichrichter 28, 31, 34 sind jeweils in Brückenschaltung unter Verwendung von vier Halbleiter-Bauelementen gebildet (Brückengleichrichter). Zwischen den Gleichanschlüssen eines jeden Gleichrichters 28 bzw. 31 bzw. 34 ist ein Stützkondensator 37 bzw. 38 bzw. 39 angeordnet. Die Gleichanschlüsse aller Gleichrichter 28, 31, 34 sind in Serie mit einer Last 40, beispielsweise einer Sensor-Messeinheit + Sensor-Elektronik oder einer Ansteuereinheit eines Aktors verschaltet.

Selbstverständlich sind bezüglich der Sensoren und/oder Aktoren 27.1...27.n auch andere Ausführungsformen zur Erzeugung elektrischer Energie aus einem Magnetfeld realisierbar, es wird hierzu ausdrücklich auf die in der DE 100 55 404 A1 in den Fig. 4, 5, 6 und 8 erläuterten Varianten hingewiesen, welche Serien-Resonanzkreise, Parallel-Resonanzkreise, in Serie geschaltete Gleichanschlüsse der Gleichrichter, parallel geschaltete Gleichanschlüsse der Gleichrichter und transformatorisch benutzte Wicklungen behandeln.

### Bezugszeichenliste:

- 1: erste Wicklung (z-Spule)
- 2: zweite Wicklung (x-Spule)
- 3: dritte Wicklung (y-Spule)
- 4: Maschine oder Anlage
- 5: Wicklungsachse der ersten Wicklung (z-Achse)
- 6: Wicklungsachse der zweiten Wicklung (x-Achse)
- 7: Wicklungsachse der dritten Wicklung (y-Achse)
- 8: Resonanzkondensatoren
- 9: erste Einspeiseschaltung
- 10: zweite Einspeiseschaltung
- 11: dritte Einspeiseschaltung
- 12: Umschalteinrichtung
- 13: Ansteuereinrichtung
- 14: Wicklung des ersten Wicklungspaares (z-Spule)
- 15: Wicklung des ersten Wicklungspaares (z-Spule)
- 16: Wicklung des zweiten Wicklungspaares (x-Spule)
- 17: Wicklung des zweiten Wicklungspaares (x-Spule)
- 18: Wicklung des dritten Wicklungspaares (y-Spule)
- 19: Wicklung des dritten Wicklungspaares (y-Spule)
- 20: weitere Wicklung zur Bildung eines Wicklungssystems (x-Spule)
- 21: weitere Wicklung zur Bildung eines Wicklungssystems (y-Spule)
- 22: Magnetfeldvektor
- 23: Ursprung mit x = y = z = 0
- 24: Kreisbahn des Magnetfeldvektors in der xy-Ebene
- 25: Kreisbahn des Magnetfeldvektor in der yz-Ebene
- 26: Kreisbahn des Magnetfeldvektors in der zx-Ebene
- 27: 27.1, 27.2...27.n Sensor oder Aktor
- 28: Gleichrichter
- 29: Wicklung
- 30: Resonanzkondensator
- 31: Gleichrichter
- 32: Wicklung
- 33: Resonanzkondensator
- 34: Gleichrichter
- 35: Wicklung
- 36: Resonanzkondensator
- 37: Stützkondensator
- 38: Stützkondensator
- 39: Stützkondensator
- 40: Last
- 41: Magnetfelderzeugungseinrichtung

## Patentansprüche

1. Magnetfelderzeugungssystem mit einer dreidimensionalen Wicklungsanordnung mit drei im wesentlichen orthogonal zueinander angeordneten, eine Maschine oder Anlage (4) umschließenden Wicklungen (1, 2, 3) oder Wicklungspaaren (14, 15, 16, 17, 18, 19) oder Wicklungssystemen (14, 15, 16, 17, 20, 18, 19, 21), deren Wicklungsachsen (5, 6, 7) im wesentlichen senkrecht aufeinander stehen und die über drei Einspeiseschaltungen (9, 10, 11) mit Wechselgrößen versorgt werden, **dadurch gekennzeichnet,**
- **dass** zwei Wicklungen / Wicklungspaare / Wicklungssysteme mit ersten Wechselgrößen gespeist werden, welche eine gleiche erste Frequenz (f₁) aufweisen und miteinander synchronisiert sind,
- **dass** eine Phasenverschiebung von vorzugsweise 90° zwischen den beiden ersten Wechselgrößen eingestellt wird,
- **dass** eine Wicklung / Wicklungspaar / Wicklungssystem mit einer zweiten Wechselgröße gespeist wird, welche eine zweite Frequenz (f₂) aufweist, die geringer als die erste Frequenz ist,
- **dass** eine sukzessive Umschaltung dieser Wechselgrößen auf die drei Wicklungen / Wicklungspaare / Wicklungssysteme mit einer dritten Frequenz (f₃) erfolgt, die geringer als die zweite Frequenz ist.

2. Magnetfelderzeugungssystem nach Anspruch 1, **dadurch gekennzeichnet, dass** sich erste Frequenz (f₁), zweite Frequenz (f₂) und dritte Frequenz (f₃) jeweils um ungefähr zehn Prozent unterscheiden.

3. Magnetfelderzeugungssystem nach Anspruch 1, **dadurch gekennzeichnet, dass** sich erste Frequenz (f₁), zweite Frequenz (f₂) und dritte Frequenz (f₃) jeweils um einen Faktor von ungefähr zehn unterscheiden.
